# EUROPÄISCHE PATENTSCHRIFT

(11) **EP 1 660 782 B1**
(45) Veröffentlichungstag und Bekanntmachung des Hinweises auf die Patenterteilung: **13.01.2010**
(21) Anmeldenummer: 04763449.8
(22) Anmeldetag: 23.07.2004
(51) Int. Cl.: F16C 21/00

(54) **LAGEREINHEIT FÜR UMLAUFENDE RADIALLAST**
BEARING UNIT FOR A REVOLVING RADIAL LOAD
UNITE PALIER POUR CHARGE RADIALE ROTATIVE

(30) Priorität: 29.08.2003 DE 10340261
(43) Veröffentlichungstag der Anmeldung: 31.05.2006
(73) Patentinhaber: Robert Bosch GmbH, 70469 Stuttgart (DE)
(72) Erfinder: SCHELBERT, Johannes, 97794 Rieneck (DE)
(74) Vertreter: Thürer, Andreas
(86) Internationale Anmeldenummer: PCT/EP2004/008276
(87) Internationale Veröffentlichungsnummer: WO 2005/028889

(56) Entgegenhaltungen:
- EP-A- 0 843 106
- WO-A-99/53209
- US-A- 3 385 640
- US-A- 3 533 667
- US-A- 4 881 828
- US-A- 5 810 485

## Beschreibung

Die Erfindung betrifft eine Vorrichtung zur Vermeidung von Passungsrost und Ausschlagen des Lagersitzes bei Motoren wobei auf das Motorlager eine umlaufende Radiallast wirkt, z.B. bei Motoren mit steifer Kupplung.

Beim Anbau von Elektromotoren an Maschinen können zur Drehmomentübertragung Riemen, Ritzel oder Kupplungen verwendet werden, wobei die klassische Lagerbelastung eine Punktlast ist. Bei Verwendung einer sehr steifen Kupplung wird eine umlaufende Radiallast generiert. Der Lagersitz stellt sich in den meisten Fällen als die erste mechanische "Schwachstelle" heraus. Durch die umlaufende Radiallast dreht sich der Lageraußenring und verursacht eine Vergrößerung des Lagersitzes. Das abgetragene Material der sogenannten Passungsrost, kann in den Lagerinnenraum eindringen, was zum vorzeitigen Ausfall des Lagers führt.

Durch einen Ausfall eines einzigen Lagers können komplexe Fertigungseinrichtungen, wie z.B. Druckmaschinen, für einige Stunden ausfallen. Für diese spezielle Belastung gibt es z.Z. nur Kompromisslösungen, z.B. den Lageraußenring axial klemmen, oder der Lageraußenring in die Lagerpassung einschrumpfen. Diese Lösungen erhöhen zwar etwas die Lebensdauer der Komponenten, das Grundproblem wird aber nicht gelöst.

Die US-A-3 385 640 beschreibt ein Radialwälzlager mit einem Innenlaufring und einem äußeren Laufring. Sowohl der innere als auch der äußere Laufring sind in einem Gleitlager drehbar gelagert. Die Gleitflächen sind so ausgelegt, dass die Gleitlager bei einem Stillstand des Wälzlagers weiterarbeiten und somit einen Schaden am Lager verhindern. Auf diese Weise wird die vom Wälzlager aufzunehmende Drehzahl auf die Hälfte bis zu einem Fünftel der von üblichen Wälzlagern aufzunehmenden Drehzahl herabgesetzt.

Es ist daher Aufgabe der vorliegenden Erfindung, eine Vorrichtung der eingangs genannten Art anzugeben, bei der der wegen der umlaufenden Radiallast verursachte mechanische Schaden des Lagersitzes minimiert bzw. eliminiert wird.

Diese Aufgabe wird gelöst durch die Merkmale des Hauptanspruchs.

Der Kern der Erfindung besteht darin, dass ein Wellenlager, welches eine Antriebswelle bezüglich eines Gehäuses lagert, bezüglich des Gehäuses selbst gleitend gelagert ist und dass die Passung zwischen Außenring und Gleitlager derart gewählt ist, dass unter der umlaufenden Radiallast des Wellenlagers, eine gegenüber der Drehung der Welle langsamere Drehung des Außenringes bezüglich des Gehäuses ermöglicht ist. Die Kombination aus Gleitlagerung des Außenrings und Passung eliminiert die Abnutzung des Lagersitzes, wobei eine Spielpassung zwischen Außenring und Gleitlager verwendet wird. Die Passung zwischen Außenring und Gleitlager wird so gewählt, dass die Reibungskraft zwischen dem Außenring und dem Gleitlager unter betriebsüblicher Punktlast groß genug ist um eine relative Bewegung der Teile zu verhindern; dadurch verhält sich die Lagerung unter normalen betriebsüblichen Lasten wie ein reines Wälzlager. Die Lagerung ist deswegen sowohl für alle üblichen, - als auch für spezielle Sonderanwendungen geeignet.
Die Erfindung kann vorteilhafterweise auch als Lagerung für die Abtriebswelle eines Elektromotors ausgebildet sein, wobei das Gleitlager in einem Lagersitz im Motorgehäuse 1 montiert ist. Diese Verwendung der Erfindung führt dazu, dass Elektromotoren als steifgekoppelte Direktantriebe eingesetzt werden können, ohne, dass die Lager frühzeitig ausfallen.
Eine weitere bevorzugte Ausgestaltung der Erfindung besteht darin, dass die Abtriebswelle die Welle eines gehäuselosen Elektromotors ist und dass das Gleitlager in einem Lagersitz in der Maschine, in der der Motor eingebaut ist, montiert ist. Somit ist die Erfindung gleichzeitig für Standard-Motoren als auch für immer mehr in den Einsatz kommende gehäuselose Motoren optimiert.
In einer weiteren vorteilhaften Ausführung ist das Wellenlager ein Wälzlager mit gleitend, vorzugsweise mit Teflon, beschichtetem Außenring. Somit kann die Erfindung auch für Fälle in denen die Radiallast nur gering ist oder den Platzbedarf minimiert werden muss, optimiert.
In noch einer weiteren vorteilhaften Ausführungsform wird eine FG/h Spielpassung zwischen dem Außenring und dem Gleitlager benutzt. Diese Passung erlaubt die benötigte Axialbewegung zwischen dem Außenring und dem Gleitlager, erbringt aber auch die benötigte Reibung, um die Drehung des Außenrings ohne umlaufende Radialkraft zu vermeiden.
Durch die Wahl der Passungen hat sich als vorteilhaft erwiesen, wenn das Verhältnis Drehzahl des Außenringes zur Wellendrehzahl im Bereich von 1:1500 bis 1:2600 liegt. Damit werden die Oberflächen nicht unnötigerweise abgeschliffen, aber die schädlichen umlaufenden Radialkräfte aufgenommen.

Die Erfindung wird nachfolgend anhand von Ausführungsbeispielen im Zusammenhand mit den Zeichnungen näher erläutert.

Es zeigt:

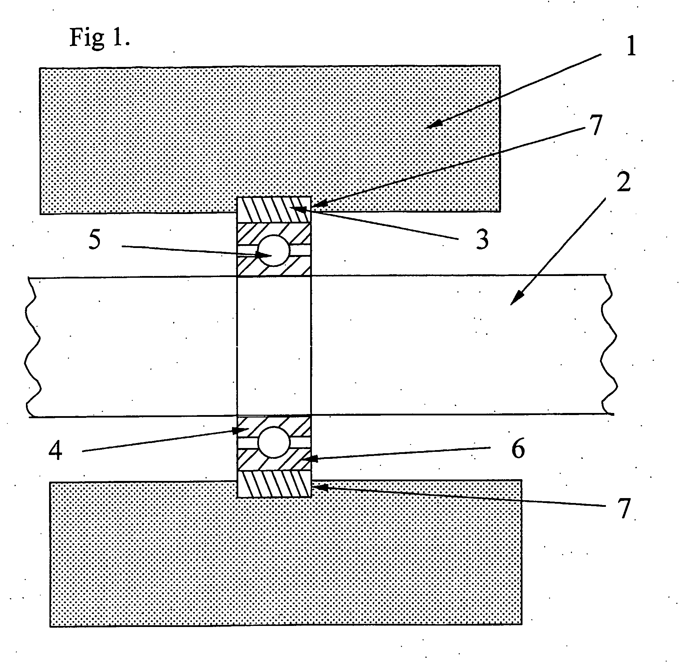

Fig.1: eine erfindungsgemäß gelagerte Welle

Figur 1 zeigt in schematisierter Darstellung eine Antriebswelle 2, ein Lager bestehend aus vier mechanischen Komponenten 3,4,5,6 und ein Gehäuse 1. Die Welle 2 wird vom Lager 3,4,5,6 abgestützt und das Lager 3,4,5,6 wird in ein Lagersitz 7 im Gehäuse 1 fest montiert. Die Komponenten 4,5, und 6 bilden ein Wälzlager, dessen Innenring 4 auf der Welle 2 drehfest sitzt und dessen Außenring 6 dem Gehäuse 1 gegenüber mittels eines Gleitlagers 3 drehbar gelagert ist. Um das Reibungsmoment zwischen Außenring 6 und Gleitlager 3 auf ein Minimum zu reduzieren, kann sowohl der Außenring 3 des Wälzlagers 4,5,6 als auch das Gleitlager 3 mit einer reibungsarmen Schicht, z.B. mit einer Teflonschicht beschichtet werde. Diese zweifache Beschichtung ist aber in den meisten Fällen nicht nötig.

In Anwendungen, wo die Motorwelle 2 mit der Last entweder direkt oder mittels einer sehr steifen Kupplung mechanisch verbunden ist, kann es vorkommen, dass die Last die auf der Welle 2 übertragen wird nicht stationär ist, d.h. punktförmig, sondern umlaufend ist. Die umlaufende Last verursacht Radialkräfte die von der nähesten Lagerstelle aufgenommen werden müssen. Das durch die umlaufende Last generierte Drehmoment wird auf dem Lager 3,4,5,6 bzw. deren Außenring 6 übertragen. Wenn das Drehmoment die Haftreibungschwelle zwischen dem Außenring 6 des Wälzlagers 4,5,6 und dem Gleitlager 3 überschreitet, dreht sich der Außenring 6 dem Gleitlager 3 bzw. dem Gehäuse 1 gegenüber.

Die absolute Geschwindigkeit des Außenrings 6 hängt unmittelbar von der gewählten Passung Außenring 6 /Gleitlager 3, d.h. vom Luftspalt zwischen Außenring 6 und Gleitlager 3 ab. Das optimale Verhältnis Wellendrehzahl zu Außenringdrehzahl liegt im Bereich zwischen 1500:1 und 2600:1 und entspricht einem Passungsspiel zwischen ungefähr 0,05 und 0,03mm. Eine Welledrehzahl von 2500 U/min entspricht bei einem Verhältnis von 2500:1 eine Außenringdrehzahl von 1 U/min. Diese verhältnismäßige sehr langsame Drehzahl ist für das Gleitlager 3 unschädlich und die Abnutzung des Lagersitzes 7 ist minimal. Sollte aber im Extremfall die Beschichtung des Gleitlagers 3 abgerieben werden, wird die Wirksamkeit der Erfindung nicht sehr beeinträchtigt, weil das Gleitlager 3 aus Bronze besteht und Bronze auf Stahlkontakt auch reibungsarm ist. Es wäre auch sicherlich möglich, das Gleitlager 3 weg zu lassen und ein mit einem Außenring 6 beschichtetes Wälzlager 4,5,6 zu verwenden, obwohl diese Lösung weniger effektiv wäre.

Die erfindungsgemäße Lösung hat für den Maschinenbauer den Vorteil, dass keine Änderung an der Mechanik vorgenommen werden muss, und für den Motorhersteller der Vorteil entsteht, dass Standard-Komponenten verwendet werden können. Außerdem werden keine speziellen Werkzeuge oder Fertigungsprozesse benötigt, d.h., zusätzliche Herstellungskosten sind minimal.

### Bezugszeichenliste

- 1: Gehäuse
- 2: Welle
- 3: Gleitlager
- 4: Lager-Innenring
- 5: Wälzlager-Laufring
- 6: Wälzlager Außenring
- 7: Lagersitz des Gleitlagers

## Patentansprüche

1. Lagerung einer Abtriebswelle (2), mit einem Wälzlager (3,4,5,6), welches die Abtriebswelle (2) in einem Gehäuse (1) lagert, mit einem wellenfesten Innenring (4) und einem Außenring (6), wobei der Außenring (6) des Wellenlagers (3,4,5,6), bezüglich des Gehäuses gleitend gelagert ist, **dadurch gekennzeichnet, dass** die Passung zwischen Außenring und Gleitlager (3) derart gewählt ist, dass unter einer umlaufenden Radiallast des Wellenlagers (3,4,5,6), eine gegenüber der Drehung der Welle (2) langsamere Drehung des Außenringes (6) bezüglich des Gehäuses (1) ermöglicht ist und dass die Reibungskraft zwischen dem Außenring (6)und dem Gleitlager(3)unter betriebsüblicher Punktlast groß genug ist, um eine relative Bewegung der Teile (1, 3, 6) zu verhindern.

2. Lagerung nach Anspruch 1, **dadurch gekennzeichnet, dass** unter der umlaufenden Radiallast der Außenring (6) mit einer Geschwindigkeit dreht, die lediglich einem Bruchteil der Geschwindigkeit der Abtriebswelle (2) entspricht.

3. Lagerung nach einem der Ansprüche 1 - 2, **dadurch gekennzeichnet, dass** die Abtriebswelle (2) die Welle eines Elektromotors ist und dass das Gleitlager (3) in einem Lagersitz im Motorgehäuse (1) montiert ist.

4. Lagerung nach einem der Ansprüche 1 - 3, **dadurch gekennzeichnet, dass** die Abtriebswelle (2) die Welle eines gehäuselosen Elektromotors ist und dass das Gleitlager (3) in einem Lagersitz in der Maschine, in der der Motor eingebaut ist, montiert ist.

5. Lagerung nach Anspruch 1, **dadurch gekennzeichnet, dass** das Wellenlager ein Wälzlager mit einem gleitenden, beschichteten Außenring ist.

6. Lagerung nach Anspruch 1, **dadurch gekennzeichnet, dass** die Passung eine Spielpassung oder äquivalent ist.

7. Lagerung nach Anspruch 6, **dadurch gekennzeichnet, dass** die Passung eine FG/h Passung ist.

8. Lagerung nach Anspruch 3, **dadurch gekennzeichnet, dass** das Verhältnis Außenringdrehzahl zur Wellendrehzahl im Bereich von 1:1500 bis 1:2600 liegt.

## Claims

1. Mounting of an output shaft (2), with a rolling bearing (3, 4, 5, 6) which supports the output shaft (2) in a housing (1), with a shaft-fixed inner ring (4) and with an outer ring (6), the outer ring (6) of the shaft bearing (3, 4, 5, 6) being mounted slideably with respect to the housing, **characterized in that** the fit between the outer ring and plain bearing (3) is selected such that, under a revolving radial load on the shaft bearing (3, 4, 5, 6), a rotation of the outer ring (6) with respect to the housing (1) which is slower than the rotation of the shaft (2) is made possible, and **in that** the frictional force between the outer ring (6) and the plain bearing (3) under the operationally customary point load is sufficiently high to prevent a relative movement of the parts (1, 3, 6).

2. Mounting according to Claim 1, **characterized in that**, under the revolving radial load, the outer ring (6) rotates at a speed which corresponds to only a fraction of the speed of the output shaft (2).

3. Mounting according to one of Claims 1 and 2, **characterized in that** the output shaft (2) is the shaft of an electric motor, and **in that** the plain bearing (3) is mounted in a bearing seat in the motor housing (1).

4. Mounting according to one of Claims 1 to 3, **characterized in that** the output shaft (2) is the shaft of a housing-free electric motor, and **in that** the plain bearing (3) is mounted in a bearing seat in the machine in which the motor is installed.

5. Mounting according to Claim 1, **characterized in that** the shaft bearing is a rolling bearing with a sliding coated outer ring.

6. Mounting according to Claim 1, **characterized in that** the fit is a clearance fit or equivalent.

7. Mounting according to Claim 6, **characterized in that** the fit is an FG/h fit.

8. Mounting according to Claim 3, **characterized in that** the ratio of the outer-ring rotational speed to the shaft rotational speed lies in the range of 1:1500 to 1:2600.

## Revendications

1. Palier pour un arbre de sortie (2) comprenant un palier à roulement (3, 4, 5, 6) recevant l'arbre de sortie (2) dans un boîtier (1), ayant une bague intérieure (4) solidaire de l'arbre et une bague extérieure (6),
la bague extérieure (6) du palier d'arbre (3, 4, 5, 6) étant montée coulissante par rapport au boîtier,
**caractérisé en ce que**
l'ajustage entre la bague extérieure et le palier lisse (3) est choisi pour que sous l'effet de la charge radiale tournante, appliquée au palier d'arbre (3, 4, 5, 6), la bague extérieure (6) puisse tourner plus lentement que l'arbre (2) par rapport au boîtier (1), et
la force de frottement entre la bague extérieure (6) et le palier lisse (3) sous une charge ponctuelle habituelle de fonctionnement, est suffisamment grande pour éviter le mouvement relatif des pièces (1, 3, 6).

2. Palier selon la revendication 1,
**caractérisé en ce que**
sous l'effet de la charge radiale tournante, la bague extérieure (6) tourne à une vitesse qui correspond seulement à une fraction de la vitesse de l'arbre de sortie (2).

3. Palier selon les revendications 1 et 2,
**caractérisé en ce que**
l'arbre de sortie (2) est l'arbre d'un moteur électrique et le palier lisse (3) est monté dans le siège de palier d'un carter de moteur (1).

4. Palier selon les revendications 1 à 3,
**caractérisé en ce que**
l'arbre de sortie (2) est l'arbre d'un moteur électrique sans boîtier, et le palier lisse (3) est monté dans un siège de palier de la machine intégrant le moteur.

5. Palier selon la revendication 1,
**caractérisé en ce que**
le palier d'arbre est un palier à roulement ayant une bague extérieure glissante, munie d'un revêtement.

6. Palier selon la revendication 1,
**caractérisé en ce que**
l'ajustage est un ajustage de jeu ou un ajustage équivalent.

7. Palier selon la revendication 6,
**caractérisé en ce que**
l'ajustage est un ajustage FG/h.

8. Palier selon la revendication 3,
**caractérisé en ce que**
le rapport de la vitesse de rotation de la bague extérieure à la vitesse de rotation de l'arbre se situe dans une plage comprise entre 1:1500 et 1:2600.
